# EUROPÄISCHE PATENTSCHRIFT

(11) **EP 2 831 469 B1**
(45) Veröffentlichungstag und Bekanntmachung des Hinweises auf die Patenterteilung: **14.08.2019**
(21) Anmeldenummer: 13707867.1
(22) Anmeldetag: 05.03.2013
(51) Int. Cl.: F16H 57/04, H02K 1/32, H02K 5/20, H02K 7/116

(54) **ANTRIEBSEINHEIT MIT ÖLAUSTAUSCH**
DRIVE UNIT WITH OIL EXCHANGE
UNITÉ D'ENTRAÎNEMENT AVEC ÉCHANGE D'HUILE

(30) Priorität: 30.03.2012 DE 102012102798
(43) Veröffentlichungstag der Anmeldung: 04.02.2015
(73) Patentinhaber: Bombardier Transportation GmbH, 10785 Berlin (DE)
(72) Erfinder: GUMPOLDSBERGER, Thomas, A-4431 Haidershofen (AT); SIEGEL, Hannes, A-3353 Seitenstetten (AT)
(74) Vertreter: Brunotte, Joachim Wilhelm Eberhard
(86) Internationale Anmeldenummer: PCT/EP2013/054431
(87) Internationale Veröffentlichungsnummer: WO 2013/143809

(56) Entgegenhaltungen:
- EP-A2- 1 414 134
- WO-A1-2011/101222
- DE-A1-102010 008 584
- US-A1- 2010 320 849

## Beschreibung

Die Erfindung betrifft eine Antriebseinheit für Fahrzeuge, welche ein Getriebe, eine Bremse und eine dazwischen angeordnete Elektromaschine umfasst. Die Elektromaschine besitzt dabei eine Kühlung, die getrennt von den weiteren Bauteilen funktioniert. In den weiteren Bauteilen wird ein getrennter Schmierkreislauf unter Verwendung vorhandener Bauteile aufrechterhalten und der Schmierkreislauf als weiterer Kühlkreislauf genutzt.

### Stand der Technik

Aus dem Stand der Technik ist die Druckschrift DE69923553 T2 bekannt. In dieser Druckschrift wird eine Antriebseinheit mit einem flüssigkeitsgekühlten, elektrischen Motor mit angeschlossenem Planetengetriebe vorgestellt. Diese Antriebsvorrichtung sieht eine Wasserkühlung für den elektrischen Motor vor, wobei der Kühlkreislauf von einer Pumpenfunktion im Planetengetriebe angetrieben wird. Zu diesem Zweck muss das angeschlossene Planetengetriebe geeignet aufgebaut und die Bauteile speziell vorgeformt sein. Im Stand der Technik wird hierfür das Hohlrad des Planetengetriebes so geformt, dass sich zwei getrennte Kammern im Getriebegehäuse ergeben, deren Inhalt über die Bewegung des Hohlrades in den Kühlkreislauf des Elektromotors gepumpt wird.

Diese Lösung erfordert eine spezielle Ausgestaltung des Getriebes und eine angepasste Ausbildung des Getriebegehäuses, welche ermöglichen, die benötigte Kühlmenge bereitzustellen.

Die vorgestellte Lösung beinhaltet die Funktion der Schmierung von Bauelementen mit der Funktion der Kühlung der Elektromaschine in einem Kreislauf mit einer Kühlflüssigkeit. Nachteilig ist die funktionsbedingte Mischung der Kühlflüssigkeit mit Luft, welche einen wesentlich kleineren Wärmeübergang bewirkt.

Aus der DE 4410074 ist eine Funktion für die Schmierung von Lagerstellen bekannt. Dabei wird ein Differential, das von einem Elektromotor angetrieben wird, über eine hohle Welle mit Schmiermittel versorgt. Die in der Druckschrift vorgestellte Lösung zeigt allerdings keinen Ansatz für die Lösung des Problems, wie das Schmiermittel zu den Lagerstellen des Differentials transportiert wird.

DE 10 2010 008 584 A1 beschreibt eine elektrische Antriebseinheit mit einem Metallgehäuse, das an seinen beiden stirnseitigen Enden von jeweils einem Deckel verschlossen ist. Eingangsseitig einer Ausgangswelle der Antriebseinheit ist ein Stirnradgetriebe vorgesehen. Ein geschlossener Ölkreislauf, um das Stirnradgetriebe zu schmieren und zu kühlen und um auch die Lager für die Ausgangswelle zu schmieren und den Rotor der elektrischen Maschine zu kühlen, weist einen Sumpf auf, durch den eine Leitung des Kühlwasserkreislaufs geführt ist.

WO 2011/101222 A1 beschreibt eine elektrische Antriebseinheit mit einer elektrischen Maschine, einem Getriebe und einem Gehäuse, wobei das Gehäuse einen Motorraum bildet, in dem die elektrische Maschine angeordnet ist. Ferner bildet das Gehäuse einen Getrieberaum, in dem zumindest ein Teil des Getriebes angeordnet ist, wobei die Antriebseinheit einen Schmierkreislauf aufweist, in den eine Schmierflüssigkeit zum Schmieren und Kühlen des Rotors der elektrischen Maschine und des Getriebes geführt ist. Die Schmierflüssigkeit zirkuliert zwischen dem Motorraum und dem Getrieberaum. Die Antriebseinheit weist einen Kühlkreislauf auf, in dem eine Kühlflüssigkeit zum Kühlen des Stators der elektrischen Maschine geführt ist, wobei die Kühlflüssigkeit des Kühlkreislaufs in wärmetauschender Verbindung zu der Schmierflüssigkeit des Schmierkreislaufs steht.

US 2010/0320849 A1 beschreibt eine elektronische Antriebseinheit mit einem Gehäuse, das sich entlang einer Primärachse erstreckt. Eine Welle und ein Elektromotor sind in dem Innenraum des Gehäuses angeordnet und beide in Wirkverbindung miteinander, sodass sie um die Primärachse rotieren können. Um das Getriebe zu schmieren, sind ein Sumpf und eine Pumpe vorgesehen. Der Sumpf ist in dem Gehäuse angeordnet.

Es ist Aufgabe der vorliegenden Erfindung eine Antriebseinheit in gegenüber den bekannten Lösungen verbesserter Ausführung zu schaffen. Insbesondere soll eine Lösung geschaffen werden, bei der Bauteile durch eine Elektromaschine voneinander getrennt, aber über ein gemeinsames System geschmiert und gekühlt werden. Das Schmiermittel wird sowohl für die Lager der Elektromaschine, für das Getriebe als auch für die Lager von An - und Abtriebsflasch benötigt. Da eine Elektromaschine zwischen den Bauteilen angeordnet ist, hat man das Problem zweier getrennter Ölräume.

Das Problem wird gelöst mit einer erfindungsgemäßen Antriebseinheit mit den Merkmalen von Anspruch 1.

Vorteilhafterweise erfüllt der getrennte Schmierkreislauf die Funktion der Kühlung mit.

Es ist von Vorteil, dass der Schmierkreislauf durch eine Hohlwelle der Elektromaschine geführt wird.

In Einklang mit Anspruch 1 wird der ölführende Kanal insbesondere der hohlen Welle aus dem Ölraum des Getriebes über Ölverdrängung aus den Zwischenräumen der Zahneingriffe des Sonnenrades gespeist wird. Dadurch wird eine gleichmäßige Einspeisung von Öl vom Ölraum des Getriebes in den bremsseitig zugeordneten Ölraum gewährleistet.

Ein im Gehäuse angeordneter Ölkanal führt das eingespeiste Öl wieder in den Ölraum des Getriebes zurück und bewirkt einen geschlossenen Schmierkreislauf.

Durch die Verwendung der Zahneingriffe des Sonnenrades im Getriebe für das Einspeisen von Öl aus dem Ölraum des Getriebes in den Ölraum der Bremse und durch die vorteilhafte Ausgestaltung des Kanals ist eine gleichmäßige Schmierung der Lagerstellen gewährleistet und im Betrieb stellt sich unterschiedliche Ölpegel in den beiden Ölräumen ein.

### Beschreibung der Erfindung

Die erfindungsgemäße Lösung und ihre vorteilhafte Ausgestaltung wird anhand einer einzigen Figur in der nachfolgenden Beschreibung näher erläutert.

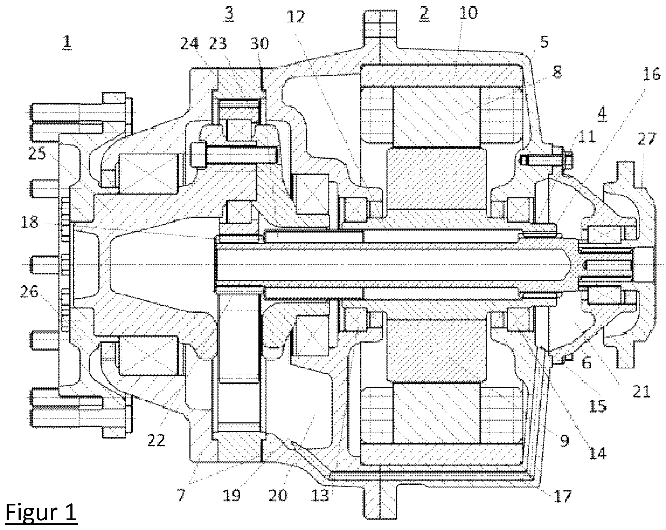

Figur 1 zeigt einen Längsschnitt durch die erfindungsgemäße Antriebseinheit.

In Figur 1 wird eine erfindungsgemäße Antriebseinheit 1 dargestellt, die aus einem Elektromotor 2 und einem Getriebe 3 sowie einer Bremse 4 besteht. Alle einzelnen Bauteile der Antriebseinheit 1 sind in einem Gehäuse zusammengefasst. Dabei wird das Gehäuse der Elektromaschine 2 mit 5 bezeichnet, der Lagerdeckel der Bremse mit 6 und das Gehäuse des Getriebes mit 7. Die Gehäuseteile 5, 6, 7 sind dicht miteinander verbunden und können auch mehrteilig aufgebaut sein. So ist in der Figur das Gehäuse des Getriebes 7 zweiteilig ausgebildet. Die in der Figur skizzierte Elektromaschine 2 weist einen Stator 8 sowie einen Rotor 9 auf. Der Rotor 9 ist mit einer Hohlwelle 11 fest verbunden und mit den Lagern 13 und 14 in den Gehäuseteilen 6 und 7 drehbar gelagert. Die Elektromaschine 2 weist einen Kühlmantel 10 auf. Die Kühlung der Elektromaschine 2 erfolgt getrennt von dem Schmierkreislauf. Die Elektromaschine 3 ist im Allgemeinen vorteilhafterweise wassergekühlt. Weiters ist der Stator 8 und der Rotor 9 der Elektromaschine 2 von den Lagern 13 und 14 abgedichtet, der Raum von Stator 8 und Rotor 9 ist nur mit Luft gefüllt.

Die Elektromaschine 2 ist vorteilhafterweise eine permanenterregte Synchronmaschine. Die Erfindung ist aber nicht auf diesen Maschinetyp limitiert. Jede für den Antrieb geeignete Elektromaschine kann in der erfindungsgemäßen Lösung zum Einsatz kommen.

Die Hohlwelle 11 ist Teil eines ersten Kanals 12, der sich von der Getriebeseite bis zur Bremsenseite erstreckt. Das Rohr 30 ist in die Hohlwelle 11 ist auf der dem Getriebe 3 zugewandten Seite der Hohlwelle 11 eingesetzt und reicht bis nahe an die Zahneingriffe 18 des Sonnenradwelle 22. An dieser Seite besitzt das Rohr 30 eine Einschnürung. Der erste Kanal 12, welcher mantelförmig innerhalb des Rohres 30 und innerhalb der Hohlwelle 11 angeordnet ist, erweitert sich stufenweise in Richtung der Bremse 4 leicht konisch. Der Kanal mündet über Durchlassöffnungen 16, welche durch Rücknahmen am Zahnkopf der Mitnahmeverzahnung zwischen Hohlwelle 11 und Sonnenradwelle 22 ausgebildet sind, im zweiten Ölraum 21. Der zweite Ölraum 21 der Bremse 4 ist über einem Gehäusekanal 17, der im Gehäuse 5 und im Gehäuse 7 führt, mit dem ersten Ölraum 20 des Getriebes 3 verbunden.

Die in der Zeichnung dargestellte Getriebeanordnung ist ein Planetengetriebe, das aus einem Sonnenrad der Sonnenradwelle 22, aus Planetenrädern 23 und einem Hohlrad 24 besteht. Die Sonnenradwelle 22 ist mit der Hohlwelle 11 der Elektromaschine 2 und mit dem Bremsflansch 27 drehfest verbunden und über dem Bremsflansch 27 im Lagerdeckel Bremse 6 gelagert. Die Abtriebwelle 25 ist im Gehäuse Getriebe 7 gelagert und ist als Planetenträger ausgeführt, auf welchem Planetenräder 23 gelagert sind. Der Abtriebsflansch 26 sitzt konzentrisch auf der Abtriebswelle 25 und ist mit ihr drehfest verbunden. Ist die Antriebseinheit in Betrieb, wird Öl von den Planetenrädern 23 aus dem aus dem Ölsumpf des ersten Ölraumes 20 aufgenommen. Durch den Kontakt in den Zahneingriffen 18 wird Quetschöl zwischen dem Sonnenrad der Sonnenradwelle 22 und den Planetenrädern 23 erzeugt. Ein Teilstrom dieses Quetschöls wird tangential und axial in das Rohr 30 gefördert und kann durch die Einschnürung nicht mehr in den ersten Ölraum 20 abfliessen.

Die Zahnräder 22, 23 erfüllen dabei die Funktion einer Pumpe mit Verdrängerwirkung, welche Öl vom ersten Ölraum 20 in das Rohr 30 des ersten Kanals 12 transportiert. Durch die zentrifugale Verdrängerwirkung im Kanal 12 mit der leicht konischen Erweiterung wird eine gerichtete Ölströmung in Richtung Bremse erzielt. Das Öl strömt durch den ersten Kanal 12, der sich gegen die Durchlassöffnungen 16 erweitert. Durch die Durchlassöffnungen 16 gelangt das Öl in den zweiten Ölraum 21 und zu dem Lager des Bremsflansches 27, auf dem die weiteren in der Figur 1 nicht dargestellten rotierenden Teile der Bremse 4 sitzen.

Ist die Antriebseinheit 1 in Betrieb, wird Öl vom ersten Ölraum 20 in den zweiten Ölraum 21 gefördert. Das Ölpegel im ersten Ölraum 20 sinkt, wodurch die Planschverluste stark verringert werden.

Der Schmierkreislauf wird durch einen Gehäusekanal 17 geschlossen, der dem Ölraum 21 der Bremse 4 mit dem Ölraum 20 des Getriebes 3 verbindet. Über eine Eintrittsöffnung 15 im Ölraum 21 der Bremse 4 strömt Öl in den Gehäusekanal 17 ein und über eine Austrittsöffnung 19 im unteren Bereich des ersten Ölraums 20 in den Ölraum 20 des Getriebes 3 geleitet. Die Anpassung der Dimensionierung des Gehäusekanals 17 mit Ein- und Austrittsöffnung 15 und 19 in Wirkverbindung mit unterschiedlichen Höhen der Ein- und Austrittsöffnung 15 und 19 gewährleistet eine gewünschte Ölpegeleinstellung in den Ölräumen 20 und 21. Erfindungsgemäß liegt im Betrieb der Antriebseinheit 1 der Pegel im ersten Ölraum 20 weit unter dem Pegel im zweiten Ölraum 21.

Der zweite Ölraum 21 findet als strömungsberuhigter Ölraum Verwendung. Durch geeignete Gestaltung des Lagerdeckels Bremse 6 kann der zweite Ölraum 21 als Ölreservoir genutzt werden. Erfindungsgemäß wird der Schmierkreislauf durch den Kühlmantel 10 über den Gehäusekanal 17 gekühlt.

Die vorgestellte Antriebseinheit wird mit einem Planetengetriebe beschreiben. Die erfindungsgemäße Lösung lässt sich allerdings auch mit geeigneten, anderen Getriebeanordnungen realisieren, so sie denn durch die Verdrängerwirkung der Zahnradeingriffe gequetschtes Öl bereitstellen und welches durch geeignete Mittel aufgefangen und weitergeleitet werden kann. Des Weiteren kann die Elektromaschine der vorgestellten Antriebseinheit als Motor und als Generator betrieben werden. In der Beschreibung der Erfindung wird das Schmiermittel mit dem Begriff Öl beschrieben. Die Erfindung soll aber nicht nur auf Öl beschränkt sein, jede weitere Schmierflüssigkeit kann in der erfindungsgemäßen Lösung zum Einsatz kommen.

### Bezugszeichenliste

- 1: Antriebseinheit
- 2: Elektromaschine
- 3: Getriebe
- 4: Bremse
- 5: Gehäuse Elektromaschine
- 6: Lagerdeckel Bremse
- 7: Gehäuse Getriebe
- 8: Stator
- 9: Rotor
- 10: Kühlmantel
- 11: Hohlwelle
- 12: Erster Kanal
- 13,14: Lager
- 15: Eintrittsöffnung
- 16: Durchlaßöffnung
- 17: Gehäusekanal
- 18: Zahneingriff
- 19: Austrittsöffnung
- 20: Erster Ölraum
- 21: Zweiter Ölraum
- 22: Sonnenradwelle
- 23: Planetenrad
- 24: Hohlrad
- 25: Abtriebswelle
- 26: Abtriebsflansch
- 27: Bremsflansch
- 30: Rohr

## Patentansprüche

1. Antriebseinheit (1) für Fahrzeuge, die ein Getriebe (3), eine Bremse (4) und eine dazwischen angeordnete Elektromaschine (2) in einem mindestens zweiteiligen Gehäuse (5, 6, 7) aufweist, wobei ein Stator (8) der Elektromaschine (2) einen Kühlmantel (10) besitzt und eine Schmierung des Getriebes (3) und der Bremse (4) über einen getrennten Schmierkreislauf erfolgt, **dadurch gekennzeichnet, dass** der getrennte Schmierkreislauf über einen ersten Kanal (12) einen ersten Ölraum (20) des Getriebes (3) mit einem zweiten Ölraum (21) der Bremse (4) verbindet und die Aufrechterhaltung des getrennten Schmierkreislaufs in dem mindestens zweiteiligen Gehäuse (5, 6, 7) für Getriebe (3) und Bremse (4) durch Ölverdrängung aus Zwischenräumen von Zahneingriffen eines Sonnenrades des Getriebes (3) mit Planetenrädern (23) des Getriebes (3) erfolgt.

2. Antriebseinheit (1) nach Anspruch 1, **dadurch gekennzeichnet, dass** der getrennte Schmierkreislauf die Funktion der Kühlung mit erfüllt.

3. Antriebseinheit (1) nach Anspruch 1 oder 2, **dadurch gekennzeichnet, dass** ein Rückfluss vom zweiten Ölraum (21) der Bremse (4) in den ersten Ölraum (20) des Getriebes (3) über einen Gehäusekanal (17) im Gehäuse (5) der Elektromaschine (2) und im Gehäuse (7) des Getriebes (3) der Antriebseinheit (1) erfolgt.

4. Antriebseinheit (1) nach Anspruch 3, **dadurch gekennzeichnet**, das der Ölpegel im ersten Ölraum (20) des Getriebes (3) unter dem im zweiten Ölraum (21) der Bremse (4) liegt.

5. Antriebseinheit (1) nach einem der Ansprüche 1 bis 4, **dadurch gekennzeichnet, dass** eine Hohlwelle (11) der Elektromaschine (2) den ersten Kanal (12) aufweist.

6. Antriebseinheit (1) nach Anspruch 5, **dadurch gekennzeichnet, dass** sich der erste Kanal (12) von der Seite des Getriebes (3) bis zur Seite der Bremse (4) erstreckt.

7. Antriebseinheit (1) nach Anspruch 6, **dadurch gekennzeichnet, dass** der erste Kanal (12) sich stufenweise erweitert.

8. Antriebseinheit (1) nach Anspruch 6 oder 7, **dadurch gekennzeichnet, dass** der erste Kanal (12) über Durchlassöffnungen (16) im zweiten Hohlraum (21) mündet.

9. Antriebseinheit (1) nach einem der Ansprüche 1 bis 7, **dadurch gekennzeichnet, dass** der erste Kanal (12) aus dem ersten Ölraum (20) des Getriebes (3) über Verdrängerwirkung von Zahneingriffen (18) gespeist wird.

10. Antriebseinheit (1) nach einem der Ansprüche 1 bis 8, **dadurch gekennzeichnet, dass** ein Schmiermittel des getrennten Schmierkreislaufs durch mindestens eine Durchlassöffnung (16) in den zweiten Ölraum (21) der Bremse (4) fließt.

## Claims

1. A drive unit (1) for vehicles that has a gearbox (3), a brake (4), and an electric engine (2) arranged therebetween in an at least two-part housing (5, 6, 7), wherein a stator (8) of the electric engine (2) has a cooling jacket (10) and the gearbox (3) and the brake (4) are lubricated via a separate lubrication circuit, **characterized in that** the separate lubrication circuit connects a first oil chamber (20) of the gearbox (3) to a second oil chamber (21) of the brake (4) via a first channel (12) and the separate lubrication circuit in the at least two-part housing (5, 6, 7) is maintained for gearbox (3) and brake (4) by displacement of oil out of intermediate areas of meshing between a sun gear of the gearbox (3) and planetary gears (23) of the gearbox (3).

2. The drive unit (1) according to claim 1, **characterized in that** the separate lubrication circuit also satisfies the cooling function.

3. The drive unit (1) according to claim 1 or 2, **characterized in that** a backflow from the second oil chamber (21) of the brake (4) into the first oil chamber (20) of the gearbox (3) occurs via a housing channel (17) in the housing (5) of the electric engine (2) and in the housing (7) of the gearbox (3) of the drive unit (1).

4. The drive unit (1) according to claim 3, **characterized in that** the oil level in the first oil chamber (20) of the gearbox (3) is lower than that in the second oil chamber (21) of the brake (4).

5. The drive unit (1) according to any of claims 1 through 4, **characterized in that** a quill shaft (11) of the electric engine (2) has the first channel (12).

6. The drive unit (1) according to claim 5, **characterized in that** the first channel (12) extends from the side of the gearbox (3) to the side of the brake (4).

7. The drive unit (1) according to claim 6, **characterized in that** the first channel (12) expands in stages.

8. The drive unit (1) according to claim 6 or 7, **characterized in that** the first channel (12) opens into the second hollow chamber (21) via through-holes (16).

9. The drive unit (1) according to any of claims 1 through 7, **characterized in that** the first channel (12) is supplied from the first oil chamber (20) of the gearbox (3) using the displacement effect of meshing gears (18).

10. The drive unit (1) according to any of claims 1 through 8, **characterized in that** lubricant from the separate lubrication circuit flows through at least one through-hole (16) into the second oil chamber (21) of the brake (4).

## Revendications

1. Unité d'entraînement (1) pour des véhicules, qui présente une transmission (3), un frein (4) et un moteur électrique (2) disposé entre ceux-ci dans un boîtier (5, 6, 7) au moins en deux parties, dans laquelle un stator (8) du moteur électrique (2) possède une enveloppe de refroidissement (10) et une lubrification de la transmission (3) et du frein (4) est effectuée par l'intermédiaire d'un circuit de lubrification séparé, **caractérisée en ce que** le circuit de lubrification séparé relie par l'intermédiaire d'un premier canal (12) un premier compartiment à huile (20) de la transmission (3) à un deuxième compartiment à huile (21) du frein (4) et le maintien du circuit de lubrification séparé dans le boîtier (5, 6, 7) au moins en deux parties pour la transmission (3) et le frein (4) est effectué par refoulement d'huile hors des compartiments intermédiaires d'engrènements d'une roue solaire de la transmission (3) avec des pignons satellites (23) de la transmission (3).

2. Unité d'entraînement (1) selon la revendication 1, **caractérisée en ce que** le circuit de lubrification séparé remplit la fonction du refroidissement.

3. Unité d'entraînement (1) selon la revendication 1 ou 2, **caractérisée en ce qu'**un reflux depuis le deuxième compartiment à huile (21) du frein (4) jusqu'au premier compartiment à huile (20) de la transmission (3) est effectué par l'intermédiaire d'un canal de boîtier (17) dans le boîtier (5) du moteur électrique (2) et dans le boîtier (7) de la transmission (3) de l'unité d'entraînement (1).

4. Unité d'entraînement (1) selon la revendication 3, **caractérisée en ce que** le niveau d'huile dans le premier compartiment à huile (20) de la transmission (3) se situe en dessous de celui dans le deuxième compartiment à huile (21) du frein (4).

5. Unité d'entraînement (1) selon l'une quelconque des revendications 1 à 4, **caractérisée en ce qu'**un arbre creux (11) du moteur électrique (2) présente le premier canal (12).

6. Unité d'entraînement (1) selon la revendication 5, **caractérisée en ce que** le premier canal (12) s'étend depuis le côté de la transmission (3) jusqu'au côté du frein (4).

7. Unité d'entraînement (1) selon la revendication 6, **caractérisée en ce que** le premier canal (12) s'élargit progressivement.

8. Unité d'entraînement (1) selon la revendication 6 ou 7, **caractérisée en ce que** le premier canal (12) débouche dans le deuxième compartiment creux (21) par l'intermédiaire d'ouvertures de passage (16).

9. Unité d'entraînement (1) selon l'une quelconque des revendications 1 à 7, **caractérisée en ce que** le premier canal (12) du premier compartiment à huile (20) de la transmission (3) est alimenté par l'intermédiaire de l'action de refoulement d'engrènements (18).

10. Unité d'entraînement (1) selon l'une quelconque des revendications 1 à 8, **caractérisée en ce qu'**un produit de lubrification du circuit de lubrification séparé s'écoule à travers au moins une ouverture de passage (16) dans le deuxième compartiment à huile (21) du frein (4).
